# EUROPEAN PATENT APPLICATION

(11) **EP 2 940 286 A1**
(43) Date of publication of application: **04.11.2015**
(21) Application number: 14166767.5
(22) Date of filing: 01.05.2014
(51) Int. Cl.: F02M 47/02, F02M 61/16

(54) **Fuel injector filter**

(71) Applicant: Delphi International Operations Luxembourg S.à r.l., 4940 Bascharage (LU)
(72) Inventor: Harcombe, Anthony, Richmond, Surrey TW10 5DZ (GB); Nisbet, Peter, London, W11 4TP (GB)
(74) Representative: Foulkes, Laura Helen

(57) **Abstract**

A filter for a control flow of a fuel injector, wherein a primary fuel flow enters the injector through an inlet aperture, and wherein part of the primary fuel flow forms a secondary fuel flow which enters a control valve through a control flow aperture, wherein the filter is located such that only the secondary flow of fuel passes through the filter, the filter comprising filter orifices such as slots, holes or perforations, wherein at least one dimension of the filter orifices is less than the nozzle control valve lift value.

## Description

### TECHNICAL FIELD

The present invention relates to fuel injector for delivering fuel such as diesel to a combustion space of an internal combustion engine, and more particularly to a filter for a secondary fuel flow through a nozzle control valve of a fuel injector.

### BACKGROUND OF THE INVENTION

In prior art electronically controlled common rail fuel injection systems, wear of the nozzle control valve seat due to hard particle contamination of fuel is a known problem. Such wear can lead to leakage of the control valve seat, thereby reducing the efficiency of the injector.

Fuel contaminant particles which are of a smaller size than the lift of the nozzle control valve are flushed away as soon as the valve seat is opened. However, particles of a similar size to the control valve lift can become trapped at the entrance to the control valve seat and remain for a significant number of actuations, before eventually eroding a path through the control valve seat. Accordingly, contaminant particles of a dimension similar to the control valve lift, which could typically be 10 to 20 microns, are most likely to cause damage to the control valve seat, leading to valve seat leakage and inefficiency of the injector.

In current unit injectors, the problem of wear of the control valve seat has been maintained within a tolerable limit by ensuring adequate filtration of the primary fuel flow, i.e. the overall fuel flow entering the fuel injector.

Control valves for common rail injectors are pressurized continuously, and it has proved necessary in prior art embodiments to apply a hard coating on the valve seat, thereby to improve tolerance to fuel contamination.

However, common rail injectors are being used at increasingly high pressures, and are increasingly compact and efficient. This new generation of common rail injectors have an increasingly smaller margin in pump capacity to allow for valve seat leakage. Furthermore, the quality of fuel used in the next generation of common rail injectors cannot be ensured across a global market.

Filters which are currently located on the main fuel inlet to a common rail injector, thereby to filter the primary flow of fuel into the injector, comprise relatively large edge or mesh filters. The mesh size or clearance of such filters is too large to effectively filter the smaller particles which are most likely to cause damage to the control valve seat, i.e. particles which are of a similar size to the control valve lift. Reducing the mesh size or clearance of such filters is not possible as this would result in excessive pressure drop across the filter, or require a very large filter to maintain the pressure drop within a tolerable level.

### SUMMARY OF THE INVENTION

It is an object of the present invention to at least mitigate the above problems.

Accordingly the present invention provides, in a first aspect, a fuel injector for use in delivering fuel in an internal combustion engine, the fuel injector comprising a housing, an inlet aperture, a control flow aperture leading to a nozzle control valve having a known lift value, a needle piston, and a nozzle cavity provided with at least one nozzle outlet opening;
wherein a primary flow of fuel enters the injector through the inlet aperture, and wherein part of the primary flow forms a secondary flow of fuel which enters the control valve through the control flow aperture, and wherein the nozzle control valve controls movement of the needle piston, thereby controlling flow of fuel out of the nozzle cavity through the at least one nozzle outlet opening;
characterised by a filter located such that only the secondary flow of fuel passes through the filter, the filter comprising at least one filter orifice, wherein at least one dimension of the at least one filter orifice is less than the nozzle control valve lift value.

Because at least one dimension of the filter orifice is smaller than the value of the lift of the nozzle control valve, any contaminant particles entering the injector in the primary flow of fuel, which have a dimension similar to the lift of the control valve, cannot pass through the filter into the secondary, or control flow or fuel, and therefore such particles cannot cause wear or other damage to the nozzle control valve seat.

Accordingly, the present invention reduces the risk of control valve seat leakage by preventing fuel contaminant particles of a similar size to the control valve lift reaching the nozzle control valve seat.

Furthermore, by filtering only the control flow of the fuel injector system, the present invention allows for a significantly smaller and finer filter to be used than in prior art embodiments, as the volume of fuel being filtered is significantly reduced in comparison to filtering of the primary flow of fuel injected into the cylinder.

The smaller size of filter enabled by the present invention is also possible because a greater pressure drop across the filter can be sustained, without affecting the efficiency of the injection and/or combustion.

Preferably, the filter is located within the main fuel flow path between the inlet aperture and the nozzle cavity, such that the primary flow of fuel is directed past the upstream surface of the filter, thereby ensuring that any contaminant particles which are too large to pass through the filter and which have therefore collected on the upstream surface of the filter, are flushed away by swirl caused in the primary flow, and subsequently ejected out of the injector through the nozzle outlet openings, which are significantly larger that the contaminant particles.

The at least one dimension of the at least one filter orifice may be between a half and a quarter of the nozzle control valve lift value.

The filter of the present invention may comprise a plurality of holes or other perforations. In this embodiment, the at least one dimension of the filter orifices which is less than the value of the nozzle control seat lift is the maximum diameter of the holes or other perforations.

Alternatively, the at least one filter orifice may comprise a plurality of slots. In this embodiment, the at least one dimension of the filter orifice which is less than the size of the nozzle control valve lift is the width of the slots.

The filter may comprise a tube and wherein the plurality of holes, or plurality of slots, are provided on a surface of the tube. The filter may conveniently be mounted in a part of the injector housing.

The filter orifices could alternatively be machined into a surface of an alternative further component, or the surface of existing injector part or component.

The filter may alternatively be formed by a small clearance between two components, i.e. similar to an edge filter. In this embodiment, the at least one dimension of the filter orifice which is less than the value of the nozzle control valve lift is the clearance between the two components.

In a further alternative embodiment, the filter may be formed by a mesh filter, comprising a plurality of mesh orifices. In this embodiment, the at least one dimension of the filter orifice which is less than the value of the nozzle control valve lift is a minimum dimension of each mesh orifice.

### BRIEF DESCRIPTION OF THE DRAWINGS

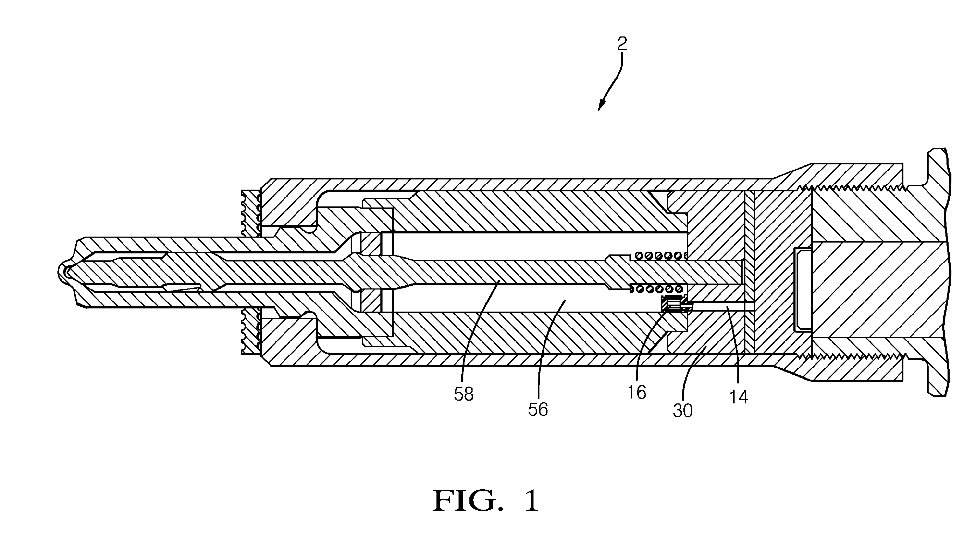

Figure 1 is a longitudinal cross-sectional view of an injector in accordance with the present invention;
Figure 2 is a detailed cross-sectional partial view of the injector of Figure 1 taken through a different longitudinal axis to Figure 1;
Figure 3 is a schematic cross-sectional partial view of an injector in accordance with the present invention;
Figure 4 is an isometric view of one embodiment of a filter in accordance with the present invention;
Figure 5 is a longitudinal cross-sectional view of the filter of Figure 4;
Figure 6 is an isometric view of the midsection of the filter of Figure 4;
   and
Figure 7 is a detailed partial front view of the midsection of Figure 6;
   and
Figure 8 is a partial cross-sectional view of an injector fitted with the filter of the Figure 4.

### DESCRIPTION OF THE PREFERRED EMBODIMENTS

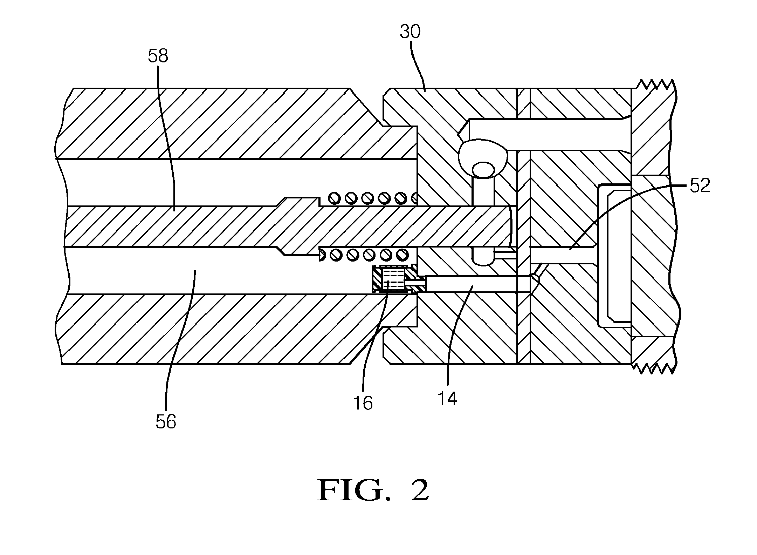

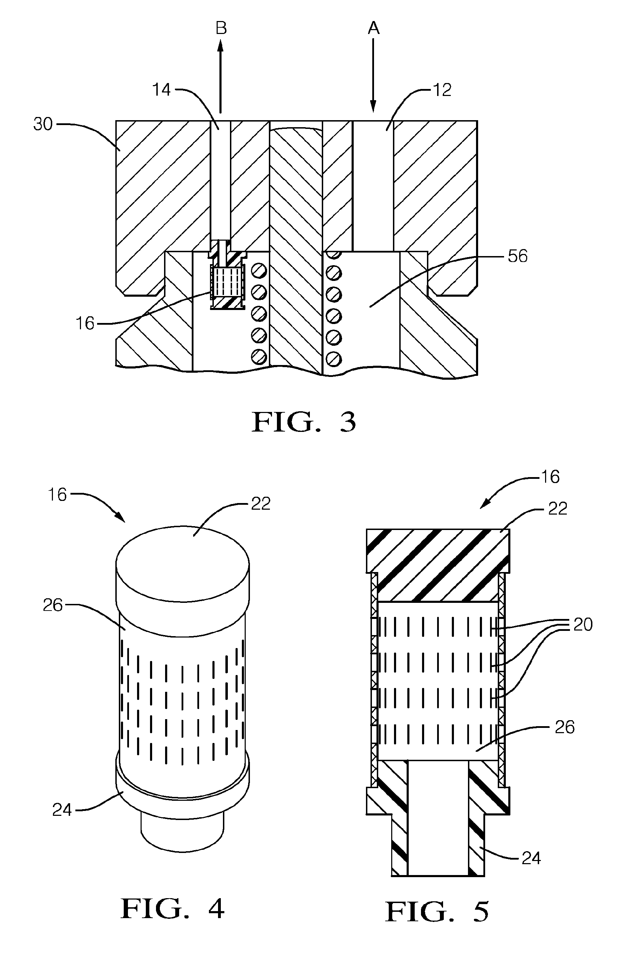

Referring to the figures, the present invention comprises a fuel injector 2 suitable for delivering fuel to an engine cylinder or other combustion space of an internal combustion engine. The fuel injector 2 comprises an injector housing and an injector inlet aperture 12 (shown in Figures 2 and 3) through which a main, or primary fuel flow enters the injector 2, in direction A (Figure 3). A nozzle cavity 56 is supplied with fuel from the primary flow.

The fuel injector 2 further comprises a nozzle control valve (located generally in region 52) including a valve seat (not shown in figures), the nozzle control valve having a known value of lift. Part of the primary fuel flow (typically 10%) forms a secondary, or control fuel flow, which is directed through a control flow aperture 14, in direction B (shown in Figure 3) towards the control valve.

Fuel pressure within a valve control chamber controls the motion of a needle piston 58, thereby controlling the flow of fuel from the nozzle cavity 56, through nozzle outlet openings (not shown in the figures).

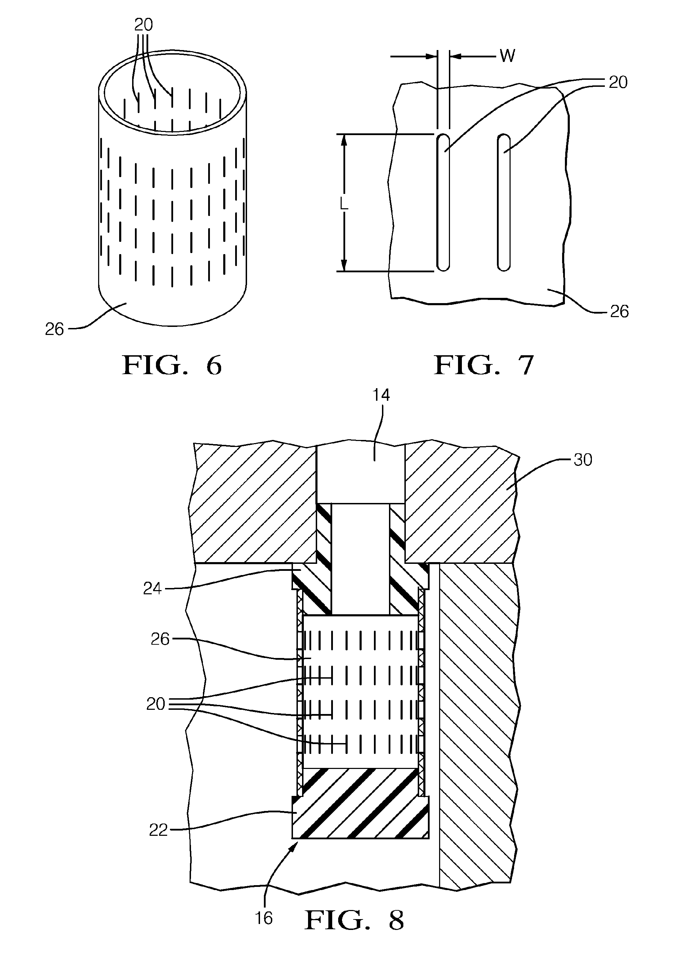

The injector 2 further comprises a filter 16 which, in the embodiment illustrated in the figures and most clearly illustrated in Figures 4 to 8, comprises a midsection 26 comprising an elongate tube of circular cross-section, a closed end cap 22 and a base section 24. The midsection 26 and the base section 24 are provided with through bores. The midsection 26 is provided with a plurality of filter orifices, which in the illustrated embodiment comprise elongate slots 20. The slots 20 have a width dimension W and a length dimension L (both shown in Figure 7), the width dimension W being less than the known value of lift of the nozzle control valve.

In the embodiment shown in the figures, the base 24 of the filter 16 is mounted in a section of the piston guide 30, adjacent the control flow aperture 14, such that fuel flowing through the filter 16 subsequently flows through the control flow aperture 14 to the nozzle control valve.

Approximately spherical fuel contaminant particles having a diameter which is larger than the width W of the slots cannot pass through the filter 16. Contaminant particles having an irregular shape, wherein a smallest dimension of the particle is larger than the length L of the slots 20, will also be prevented from passing through the filter 16.

It is not necessary for a dimension of the filter orifices to be smaller than the smallest fuel contaminant particles. As one of the dimensions of the filter orifices is less than the nozzle control lift value, the only contaminant particles which are able to pass through the filter 16 and subsequently through the nozzle control valve, are smaller than the lift of the nozzle control valve. Damage to the seat of the nozzle control valve which would be caused by contaminant particles which are of a size similar to the lift of the nozzle control valve is thereby avoided.

The filter 16 is located in a main fuel path, i.e. in the path of the primary supply of fuel which flows between the inlet aperture 12 and the nozzle cavity 56. Any contaminant particles in the main fuel flow which are too large to pass through the filter 16, are flushed away from the upstream surface of the filter 16, i.e. the external surface of the tube forming the midsection 26 of the filter 16, by swirl of the primary fuel flow. Particles of such size are therefore carried by the fuel flowing into the nozzle cavity 56, and are subsequently flushed out of the nozzle outlet openings.

The diameter of the filter 16, and the length, width and number of the slots 20 may vary. In one particular embodiment, the midsection 26 has a diameter of 1.5mm, and is provided with 2000 slots 20, each having a width of 5 microns and length of 200 microns. Accordingly, the width of the slots 20 is less than a typical value of lift of the nozzle control valve of, for example, 10 to 20 microns.

In particular examples of the present invention, one dimension of each filter orifice is between one half and one quarter of the size of the control valve lift.

In one particular embodiment, filter 16 is provided with 16 slots of 5 microns width by 6mm length. This filter has four times the flow area of the control seat and results in a pressure drop across the filter of approximately 1/16^{th}.

In further alternative embodiments, the filter 16 could be formed by a small clearance between two components, such that a singular filter orifice is formed between the components. In this embodiment, the dimension of the filter orifice which is smaller than the known lift of the nozzle control valve comprises the clearance between the two components.

Alternatively, the filter orifices could be formed as fine holes or other perforations, machined into a surface either of a filter 16 as illustrated in the figures, or into an alternative separate component located in the piston guide 30. In this embodiment, the at least one dimension which is smaller size of the known lift of the control valve is the maximum diameter of the holes or other perforations. Approximately spherical holes having a diameter larger than the maximum diameter of the holes or other perforations cannot pass through the filter 16. Furthermore, any fuel contaminant particles which are of an irregular shape, wherein the largest dimension of the particle is larger than the maximum diameter of the holes or perforations, are also prevented from passing through the filter 16.

Alternatively, the filter orifices could be formed as slots or holes, machined into a surface either of an existing component of the injector 2. In this embodiment, the at least one dimension which is smaller size of the known lift of the control valve is the width of the slots, or the diameter of the holes.

The filter 16 of the present invention may be used in an injector 2 wherein the control valve comprises a two-way control valve, or a three-way control valve wherein the flow requirement is minimized due to efficient use of control fuel.

### REFERENCES

- 2: injector
- 12: injector inlet aperture
- 14: control flow aperture
- 16: filter
- 20: slots
- 22: filter cap
- 24: filter base section
- 26: filter midsection
- 30: piston guide
- 50: control chamber
- 52: (region of) nozzle control valve
- 56: nozzle cavity
- 58: needle piston
- A: direction of flow into injector
- B: direction of flow into control valve
- L: length of slots
- W: width of slots

## Claims

**1.** A fuel injector (2) for use in delivering fuel in an internal combustion engine, the fuel injector (2) comprising a housing, an inlet aperture (12), a control flow aperture (14) leading to a nozzle control valve (52) having a known lift value, a needle piston (58), and a nozzle cavity (56) provided with at least one nozzle outlet opening;
wherein a primary fuel flow enters the injector (2) through the inlet aperture (12), and wherein part of the primary fuel flow forms a secondary fuel flow which enters the nozzle control valve (52) through the control flow aperture (14), and wherein the nozzle control valve (52) controls movement of the needle piston (58), thereby controlling flow of fuel out of the nozzle cavity (56) through the at least one nozzle outlet opening;
**characterised by** a filter (16) located such that only the secondary flow of fuel passes through the filter (16), the filter (16) comprising at least one filter orifice (20), wherein at least one dimension of the at least one filter orifice (20) is less than the nozzle control valve lift value.

**2.** A fuel injector (2) as claimed in claim 1 wherein the filter is located in a fuel flow path between the inlet aperture (12) and the nozzle cavity (56) such that the primary fuel flow passes over an upstream surface of the filter (16).

**3.** A fuel injector (2) as claimed in claim 1 or claim 2 wherein the at least one dimension of the at least one filter orifice (20) is between a half and a quarter of the control valve lift value.

**4.** A fuel injector (2) as claimed in any one of claims 1 to 3 wherein the at least one filter orifice (20) comprises a plurality of slots (20), wherein the at least one dimension of the slots is a width of each slot (20).

**5.** A fuel injector (2) as claimed in any one of claims 1 to 3 wherein the at least one filter orifice comprises a plurality of holes or perforations wherein the at least one dimension is a maximum diameter of each hole or perforation.

**6.** A fuel injector (2) as claimed in claim 4 or claim 5 wherein the filter (16) is mounted in the injector housing and comprises a tube (26), and wherein the slots, holes or perforations are provided on a surface of the tube (26).

**5.** A fuel injector (2) as claimed in claim 4 or claim 5 wherein the slots, holes or perforations are provided on a surface of a component or part of the injector (2).

**6.** A fuel injector (2) as claimed in any one of claims 1 to 3 wherein the at least one filter orifice comprises a clearance between two components and wherein the at least one dimension of the filter orifice (2) is the clearance between the two components.

**7.** A fuel injector (2) as claimed in any one of claims 1 to 3 wherein the at least one filter orifice comprises a mesh comprising by a plurality of mesh orifices and wherein the at least one dimension of the filter orifice a minimum dimension of each mesh orifice.
